# FASCICULE DE BREVET EUROPEEN

(11) **EP 1 603 393 B1**
(45) Date de publication et mention de la délivrance du brevet: **22.10.2014**
(21) Numéro de dépôt: 04715922.3
(22) Date de dépôt: 01.03.2004
(51) Int. Cl.: A01P 21/00, A01N 43/16, A01N 65/00

(54) **NOUVEAU PROCEDE POUR LA POTENTIALISATION ET LA STIMULATION DES DEFENSES NATURELLES DES PLANTES**
NEUES VERFAHREN ZUR POTENZIERUNG UND STIMULATION NATÜRLICHER ABWEHRMECHANISMEN BEI PFLANZEN
NOVEL METHOD FOR THE POTENTIATION AND STIMULATION OF NATURAL PLANT DEFENCES

(30) Priorité: 14.03.2003 FR 0303170
(43) Date de publication de la demande: 14.12.2005
(73) Titulaire: LABORATOIRES GOËMAR S.A., 35400 Saint-Malo (FR)
(72) Inventeur: CHEVOLOT, Yann, F-29660 Carantec (FR); KLARZYNSKI, Olivier, F-29420 Plouvorn (FR); YVIN, Jean-Claude, F-35400 Saint-Malo (FR); KLOAREG, Bernard, F-29420 Plouenan (FR)
(74) Mandataire: Cabinet Plasseraud
(86) Numéro de dépôt international: PCT/FR2004/000469
(87) Numéro de publication internationale: WO 2004/082381

(56) Documents cités:
- EP-A- 0 466 315
- WO-A-01/30161
- DATABASE WPI Section Ch, Week 199507 Derwent Publications Ltd., London, GB; Class C04, AN 1995-047819 XP002246457 & JP 06 327356 A (NISSHIN FLOUR MILLING CO) 29 novembre 1994 (1994-11-29)
- ESQUERRÉ-TUGAYÉ ET AL.: "Cell wall degrading enzymes, inhibitory proteins, and oligosaccharides participate in the molecular dialogue between plants and pathogens" PLANT PHYSIOL. BIOCHEM., vol. 38, no. 1/2, 2000, pages 157-163, XP002246453
- SHIBUYA AND MINAMI: "Oligosaccharide signalling for defence responses in plant" PHYSIOLOGICAL AND MOLECULAR PLANT PATHOLOGY, vol. 59, 2001, pages 223-233, XP002246454
- MCNEIL ET AL.: "Structure and function ofthe primary cell walls of plants" ANNUAL REVIEW OF BIOCHEMISTRY, 1984, pages 625-664, XP009013388
- FURMAN-MATARASSO ET AL.: "A point mutation in the ethylene-inducing xylanase elicitor inhibits the beta-1,4-endoxylanase activity but not the elicitation activity" PLANT PHYSIOLOGY, vol. 121, octobre 1999 (1999-10), pages 345-351, XP002246455

## Description

L'invention a pour objet une nouveau procédé pour la potentialisation et la stimulation des défenses naturelles des plantes, notamment des monocotylédones et en particulier des céréales et plus particulièrement du blé et des dicotylédones, notamment de la vigne, du tabac, de la pomme de terre et de la tomate.

La stimulation des défenses naturelles des plantes reste un problème des plus actuels et fait toujours l'objet de nombreuses recherches.

On sait que l'incubation de plantes en présence de substances connues sous l'appellation d'éliciteurs, stimule des réactions de défense du type:
- accumulation d'antibiotiques naturels plus connus sous le nom de phytoalexines,
- synthèse de protéines de défense tellès que les chitinases ou les glucanases, également connues sous le nom de PRP (Pathogenesis-related proteins),
- durcissement des parois cellulaires par synthèse de lignine ou de protéines de réticulation,
- synthèse de messagers secondaires tels que l'éthylène, le peroxyde d'hydrogène ou l'acide salicylique.

Parmi ces éliciteurs, on peut citer notamment les oligopectines ; elles élicitent chez diverses plantes agronomiques les susdites réactions de défense; les réponses maximales sont généralement atteintes pour des concentrations de l'ordre de 100 mg/l et elles se maintiennent à un niveau comparable jusqu'à des concentrations de 4 g/l.

A cet égard et à titre d'exemple, la production et l'accumulation des phytoalexines, en l'occurrence d'avenalumin-1 dans l'avoine, ont été obtenues, selon la demande de brevet japonais publiée N° HEI 3-339080 du 20 décembre 1991 de la Société K.K. Fushimi Seiyakusho, par mise en oeuvre sur des morceaux de feuilles d'avoine de solutions aqueuses contenant des oligomères de pectines de DP 6, DP 8, DP 10 ET DP 12 à des concentrations de 100 à 1000 mg/l.

Par ailleurs, le document publié JP 06 327356 A décrit un matériau microbien formulé à partir d'un engrais organique contenant au moins 5% d'arabinoxylane, un acide humique ainsi qu'au moins 10⁸ germes par gramme de matière sèche de matériau microbien pour lutter contre les agents pathogènes des gazons.

Dans le cadre de ses recherches visant à enrichir l'arsenal des substances susceptibles d'être utilisées en tant qu'éliciteurs dans les procédés de stimulation des défenses naturelles des plantes, notamment des monocotylédones et en particulier des céréales et plus particulièrement du blé et des dicotylédones, notamment de la vigne, du tabac, de la pomme de terre et de la tomate, la Société Demanderesse a eu le mérite dé trouver que les pentosans et en particulier les arabinoxylanes et les xylanes notamment de hêtre ainsi que leurs produits de dégradation notamment leurs oligomères répondaient à ce but.

L'invention décrit, l'utilisation des pentosans et en particulier des arabinoxylanes et des xylanes notamment de hêtre ainsi que leurs produits de dégradation en tant qu'éliciteurs dans les procédés de stimulation des défenses naturelles des plantes, notamment des monocotylédones et en particulier des céréales et plus particulièrement du blé et des dicotylédones, notamment de la vigne, du tabac, de la pomme de terre et de la tomate.

Elle a pour objet un procédé pour la stimulation des défenses naturelles des plantes, notamment des monocotylédones et en particulier des céréales et plus particulièrement du blé et des dicotylédones, notamment de la vigne, du tabac, de la pomme de terre et de la tomate, caractérisé par le fait que l'on applique, notamment aux feuilles ou aux semences ou graines, une quantité efficace d'au moins un des produits du groupe comprenant les pentosans et en particulier les arabinoxylanes, les xylanes notamment de hêtre et leurs produits de dégradation dont leurs oligomères notamment sous la forme d'une composition et plus particulièrement d'une solution aqueuse dont la concentration en au moins l'un des produits en question est de 50 mg/l à 5000 mg/l, de préférence de 50 mg/l à 1000 mg/l, la quantité efficace correspondant à la quantité du produit en question qui est apportée aux plantes à traiter en appliquant la susdite solution aqueuse à raison de 10 g à 1000 g, de préférence de 20 g à 500 g par hectare de culture.

Selon ce premier aspect, l'invention permet donc d'aider la plante en particulier au moment où elle est l'objet d'une agression par un agent pathogène ou au moment où une telle agression semble imminente, en stimulant alors ses défenses naturelles grâce à la mise en oeuvre des produits en question cette stimulation se traduisant notamment par une accumulation, dans ses tissus, en particulier de phytoalexines et des protéines PR (Pathogenesis-related proteins).

Mais fréquement une telle agression n'est pas à redouter dans l'immédiat.

Et dans ce cas, la stimulation des défenses naturelles de la plante par mise en oeuvre du procédé conforme à l'invention représente pour cette dernière une dépense énergétique non négligeable et inutile tant que l'agression ne se produit pas.

Or, s'il est parfaitement possible de surveiller les cultures en vue de détecter le moment auquel une agression par un agent pathogène risque de se produire, et auquel la mise en oeuvre du procédé conforme à l'invention devient nécessaire, une telle surveillance est fastidieuse et coûteuse.

Et un mérite supplémentaire de la Société Demanderesse est d'avoir trouvé que, selon un deuxième aspect de l'invention, il est possible de gérer cette situation en appliquant à la plante et notamment aux feuilles ou aux semences ou graines, en l'absence de tout agent pathogène, une solution aqueuse d'au moins un des produits du groupe comprenant les pentosans et en particulier les arabinoxylanes, les xylanes notamment de hêtre et leurs produits de dégradation notamment leurs oligomères dans laquelle la concentration en au moins l'un des produits en question est inférieure à la limite inférieure du domaine de concentrations applicable dans le cadre du premier aspect de l'invention, la quantité efficace c'est-à-dire la quantité d'au moins un des produits en question devant être apportée à la plante étant elle aussi inférieure à la limite inférieure du domaine retenu dans le cadre du premier aspect de l'invention, ce grâce à quoi il ne se produit aucune êlicitation notable au moment de la mise en oeuvre du procédé conforme à l'invention alors qu'au moment de l'attaque de la plante par un agent pathogène il se produit de façon totalement inattendue et surprenante une stimulation potentialisée des défenses naturelles de la plante traduisant par là une immunisation de la plante traitée.

Il s'ensuit que l'invention a également pour objet un procédé de stimulation et de potentialisation des défenses naturelles des plantes, notamment des monocotylédones et en particulier des céréales et plus particulièrement du blé et des dicotylédones, notamment de la vigne, du tabac, de la pomme de terre et de la tomate caractérisé par le fait qu'on applique, notamment aux feuilles ou aux semences ou graines et avant toute agression par un agent pathogène, une quantité efficace d'au moins un des produits du groupe comprenant les pentosans et en particulier les arabinoxylanes, les xylanes notamment de hêtre et leurs produits de dégradation dont leurs oligomères notamment sous la forme d'une composition et en particulier d'une solution aqueuse contenant le ou les produits du groupe en question à une concentration de 0.1 mg/l à 50 mg/l, de préférence de 0.5 mg/l à 20 mg/l, la quantité efficace correspondant à celle qui est apportée aux plantes à traiter en appliquant la susdite composition à raison de 50 1 à 1000 1 de préférence de 200 1 à 500 1 par hectare de culture.

La Société Demanderesse a en effet pu constater que, lorsque, selon le deuxième aspect de l'invention, les produits du groupe comprenant les pentosans et en particulier les arabinoxylanes, les xylanes notamment de hêtre et leurs produits de dégradation notamment leurs oligomères sont utilisés sous la forme de solutions aqueuses dans lesquelles elles sont présentes à des concentrations situées dans le domaine étroit de 0.1 à 50 mg/l, elles exercent sur les plantes traitées un effet potentialisateur des défenses naturelles qui n'est déclenché qu'à partir du moment où l'attaque d'un agent pathogène se produit effectivement.

L'avantage de ce deuxième aspect de l'invention est que le métabolisme de la plante n'est pas dévié vers la mise en place des réactions de défense à un moment où cette mise en place est inutile; par contre, ce métabolisme est mis en alerte et lorsque la plante est l'objet d'une agression, elle mobilise ses défenses naturelles, et cela beaucoup plus intensément qu'en l'absence du traitement conforme au procédé selon l'invention.

Les arabinoxylanes mis en oeuvre conformément à l'invention sont schématisés par la formule

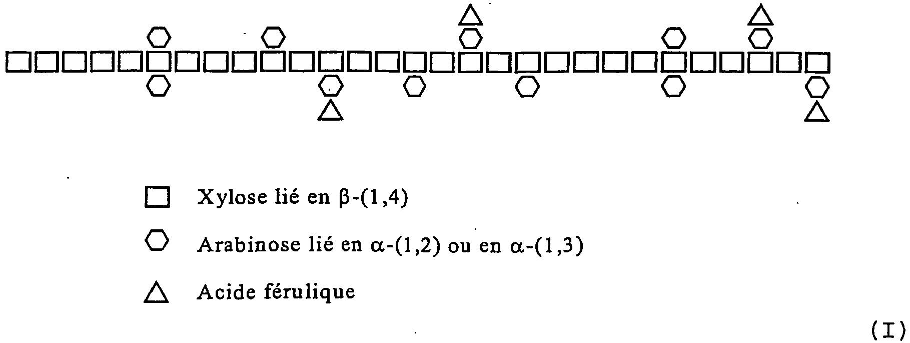

On distingue entre arabinoxylanes solubles et arabinoxylanes insolubles dans l'eau.

Leur structure générale est celle d'un squelette d'unités xylose liées en β-(1,4) et portant des unités arabinose liées soit en α-(1,2) (mono-O₂-substitutions), soit en α-(1,3) (mono-O₃-substitutions), soit en α-(1,2) et α-(1,3) (di-substitutions).

Dés molécules d'acides féruliques peuvent également substituer en O₅ les unités arabinose liées en O₃ ou en O₂ au squelette de xylane. On trouve parfois des résidus acétate.

Ces composés phénoliques peuvent parfois former, au sein de la paroi ou en conditions oxydantes in vitro, des dimères d'acide férulique, créant ainsi un pont entre deux molécules d'arabinoxylane.

L'acide férulique et les dimères d'acide férulique sont détectés dans les arabinoxylanes solubles et insolubles et leurs teneurs sont souvent supérieures dans le malt.

Dans le cas des arabinoxylanes extraits de certaines céréales, on rencontre d'autres substituants par exemple, des acides glucuroniques (dans le cas du riz, du sorgho et du son de blé), des unités xylose, glucose (riz) ou galactose (riz) ainsi que de courtes chaînes d'arabinanes (liées en α-(1,2), α-(1,3) ou α-(1,5) dans le cas du blé, du sorgho et du seigle).

Les masses molaires des arabinoxylanes solubles varient de 60 à 5 000 kDa, tandis que celles des arabinoxylanes insolubles varient de 350 à 5 000 kDa.

Les arabinoxylanes sont souvent décrits par leur rapport arabinose/xylose (A/X), par le nombre relatif de mono- et de di-substitutions et par la teneur en acide férulique.

Le xylane de hêtre est un xylane composé à au moins 90% d'unités xylose liées par des liaisons β 1,4, les 10% restants étant constitués notamment par des résidus acétate et acide methylglucuronique (M. Rosario Freixo et al, Desalination, 2002)

Les sources les plus couramment utilisées pour la production d'arabinoxylanes à des fins de recherche scientifique sont le blé et l'orge, et dans une moindre mesure le seigle et le riz. Les farines, assimilables au grain entier, sont peu intéressantes, car elles sont déjà largement exploitées en agroalimentaire.

En revanche, l'extraction des arabinoxylanes à partir de sons ou de malts constitue une source de valorisation pour ces co-produits de l'industrie des céréales (sons de blé et malt d'orge).

Par rapport au grain entier ou à la farine, les sons de céréales, dépourvus d'amidon, contiennent 20 à 40 % d'arabinoxylanes fortement substitués (70 à 80 % des radicaux xylose sont substitués).

Les malts contiennent, quant à eux, de l'amidon, mais sont plus riches en arabinoxylanes hydrosolubles (solubilisation consécutive au maltage) et ils sont quasiment dépourvus de β-glucanes (hydrolysés lors du maltage).

Leurs produits de dégradation peuvent être obtenus par hydrolyse enzymatique, notamment en ayant recours à de la xylanase.

Du point de vue pratique, on peut avoir recours à la xylanase commercialisée par la Société Gist Brocades.

On peut utiliser cette enzyme à raison de 20 mg/l. Du point de vue de l'efficacité de cette enzyme, on note qu'un gramme d'enzyme libère 120 mg d'extrémités réductrices équivalent glucose par minute.

On opère généralement à 40°C au bain-marie.

L'hydrolysat ainsi obtenu est examiné, par exemple, par chromatographe liquide à haute performance (HPLC) avec utilisation d'une colonne commercialisée sous la dénomination PA 100 par la Société Dionex.

On utilise une solution de ferricyanure pour le dosage des sucres réducteurs.

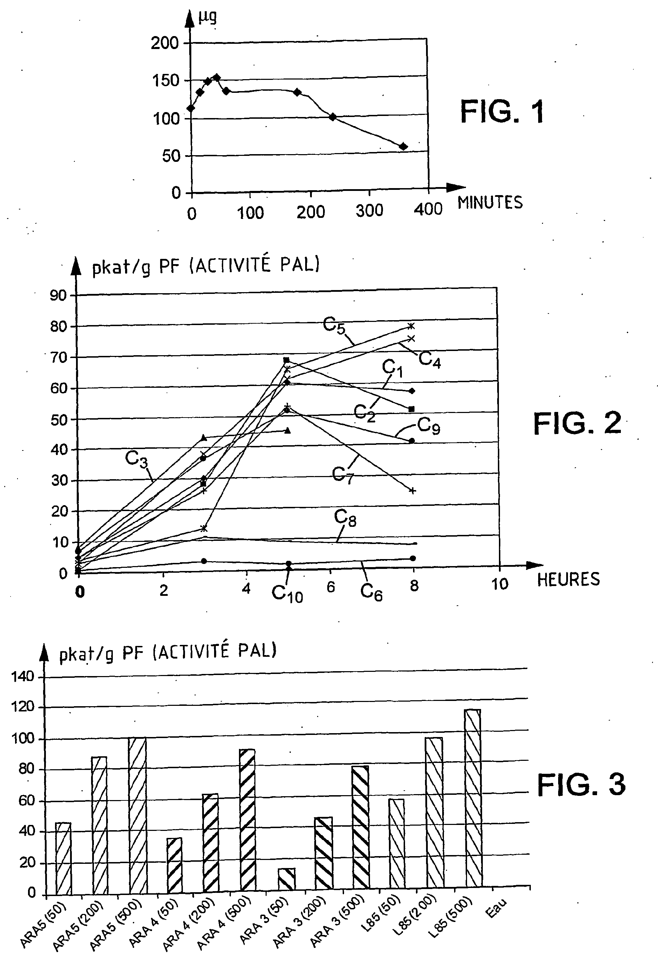

La cinétique de l'hydrolyse de l'arabinoxylane soluble sous l'action de la xylanase, suivie par la méthode dite « des sucres réducteurs » (décrite par exemple dans (D. K. Kidby et al, Analytical Chemistry, 1973))est illustrée par le graphique de la figure 1 qui montre la variation de la quantité de glucose exprimé en µg par ml de milieu d'hydrolyse, en fonction du temps exprimé en minutes.

L'examen du graphique de la figure 1 montre que dans un premier temps, il se produit une faible augmentation en extrémités réductrices, suivie d'une diminution et d'un plateau.

La phase d'augmentation en extrémités réductrices correspond à la coupure de la liaison β-1,4 de 1-a chaîne xylose par la xylanase.

La diminution des extrémités réductrices n'est pas expliquée, mais les profils HPLC attestent de l'apparition d'oligomères avec des temps de rétention élevés, confirmant le faible taux de coupures observé par la méthode des sucres réducteurs.

L'efficacité de la xylanase est faible sur ce substrat, probablement en raison de la gêne stérique engendrée par les substituants arabinose.

Dans un premier temps, la Société Demanderesse a étudié du point de vue de leur influence éventuelle sur les mécanismes de défenses naturelles des plantes
- un arabinoxylane soluble de poids moléculaire moyen de 40 kDa (compris approximativement entre 3 et 2000 kDa) extrait de malt d'orge, fourni par la Société Tépral et désigné dans ce qui suit par ARA1,
- une fraction purifiée de faible poids moléculaire ( 10kDa, le rapport arabinose/xylose soit A/X, étant égal à 0,75), fournie par la Société Tépral, désignée dans ce qui suit par ARA2.,
- une fraction d'arabinoxylane soluble désignée par ARA3, obtenue par hydrolyse enzymatique à l'aide de xylanase à partir de ARA1,
- une fraction d'arabinoxylane soluble désignée par ARA 4 obtenue par hydrolyse enzymatique à l'aide de xylanase à partir de ARA2
- une fraction d'arabinoxylane soluble désigné par ARA 5 obtenue par hydrolyse enzymatique à l'aide d'une xylanase à partir d'arabinoxylane purifié de haut poids moléculaire ( ce poids moléculaire étant de 170 kDA et le rapport A/X de 0.85 fournie par la Société Tépral,
- le xylose, désigné par XY1 et commercialisé par Sigma.
- un hydrolysat de xylane de hêtre (à 90% de xylose et commercialisé par la Société SIGMA) obtenu par dégradation à l'aide de xylanase et désigné par XY2,
- la xylanase commercialisée par la Société Gist-Brocades. et désignée par XY3.

Les produits ARA1 à ARA5 et XY1 à XY3 ont été mis en oeuvre sous la forme de solutions aqueuses de différentes concentrations.

A titre de comparaison on a traité les cellules végétales provenant des mêmes plantes dans les mêmes conditions :
- d'une part, avec des solutions aqueuses comportant aux mêmes concentrations un éliciteur bien connu, à savoir la laminarine et constituée par un β 1-3 glucane de degré de polymérisation de 25 à 50 extrait d'algues brunes et
- d'autre part, avec de l'eau.

Plus particulièrement, on a étudié l'effet. éliciteur direct des produits ARA1 à ARA5 et XY1 à XY3 en appliquant ces produits à des cultures de cellules ou suspensions cellulaires de tabac BY et de tomates de la variété MSK8.

Pour chacun des produits testés ainsi que pour la laminarine et pour l'eau, on a testé deux marqueurs des réactions de défenses, à savoir :
- l'activité phénylalanine ammonia lyase (PAL), qui est une enzyme clé pour la génération de l'acide salicylique c'est à dire un élément de la cascade de signalisation aboutissant à l'activation des gènes de défense et pour la synthèse des phytoalexines chez les plantes et
- l'activité lipoxygénase (LOX), qui est une enzyme impliquée dans la génération du jasmonate de méthyle, c'est-à-dire d'un élément de la cascade de signalisation aboutissant à l'activité des gènes de défense.

Dans un premier test, on a fait agir sur une suspension de cellules de tabac de la variété BY d'une part des solutions aqueuses de chacun des produits ARA1 à ARA5 et XY1 à XY3 à la concentration de 400µg/ml, d'autre part de la laminarine du type rappelé plus haut à la concentration de 200µg/ml et d'autre part encore de l'eau.

On a mesuré, dans les milieux ainsi constitués l'activité PAL, exprimée en picokatal par gramme de poids frais (pkat/g PF) dans chaque cas, après trois heures, puis après cinq heures et enfin après huit heures depuis le début de l'expérience.

Les résultats ont été remis sur le graphique de la figure 2 qui montre la variation de l'activité exprimé en pkat/g PF en fonction du temps exprimé en heures, la variation de cette activité étant matérialisée par les courbes C₁(ARA1), C₂(ARA2), C₃(ARA3), C₄(ARA4), C₅(ARA5), C₆(XY1), C₇(XY2), C₈(XY3), C₉ (laminarine) et C₁₀ (eau).

L'examen des courbes C₁ à C₅ montre que les cinq fractions d'arabinoxylane stimulent de manière significative l'activité de l'enzyme PAL.

On ne constate pas de différence importante d'activité entre ces différences fractions (ARA1 à ARA 5) ...

L'hydrolyse par la xylanase des arabinoxylanes n'a pas d'effet notable sur l'activité des ces fractions sauf pour la fraction ARA3 qui perd sensiblement de l'efficacité pour la stimulation de l'activité PAL.

Ni le xylose seul (courbe C₆), ni l'enzyme xylanase (courbe C₈) ne sont actifs.

Une activité intéressante est mesurée pour les oligoxylanes de hêtre (courbe C₇).

Dans un deuxième ensemble de tests, on a étudié l'effet éliciteur direct des produits ARA3, ARA4, ARA5 et de la laminarine en appliquant à des cultures de cellules ou suspensions cellulaires de tabac BY et de tomate de la variété MSK8, des solutions aqueuses à concentrations croissantes en ces produites et en laminarine, ces concentrations étant respectivement égales à 50 mg/l, 200 mg/l et 500 mg/l.

Pour chaque solution, tant du produit ARA3, ARA4 et ARA5 utilisés conformément à l'invention que de la laminarine (désignée par L85), on a testé les deux marqueurs des réactions de défenses dont il a été question plus haut, à savoir l'activité phénylalanine ammonia lyase (PAL) et l'activité lipoxygénase (LOX).

Les trois solutions étudiées à base de chacune des produits ARA3, ARA4 et ARA5 utilisés conformément à l'invention sont désignés par
- ARA3(50), ARA4(50) et ARA5(50) : solutions contenant 50mg de produit par litre,
- ARA3(200), ARA4(200) et ARA5(500): solutions contenant 200 mg de produit par litre,
- ARA3(500), ARA4 (500) et ARA5(500) : solutions contenant 500 mg de produit par litre.

Les trois solutions aqueuses de comparaison à base de laminarine sont désignés par :
L85(50) : solution contenant 50 mg de la laminarine par litre,
L85(200) : solution contenant 200 mg de la laminarine par litre,
L85(500) : solution contenant 500 mg de la laminarine par litre,

L'activité PAL est mesurée six heures après le début du traitement et l'activité LOX dix huit heures après le début du traitement d'une part avec les solutions des produits ARA3, ARA4 et ARA5, et avec les solutions de laminarine L85 ainsi qu'avec l'eau, les activités PAL et LOX exprimées respectivement en picokatal par gramme de poids frais (pkat/g PF) dans le cas de l'activité PAL et en nanokatal par gramme de poids frais (nkat/g PF) dans le cas de l'activité LOX.

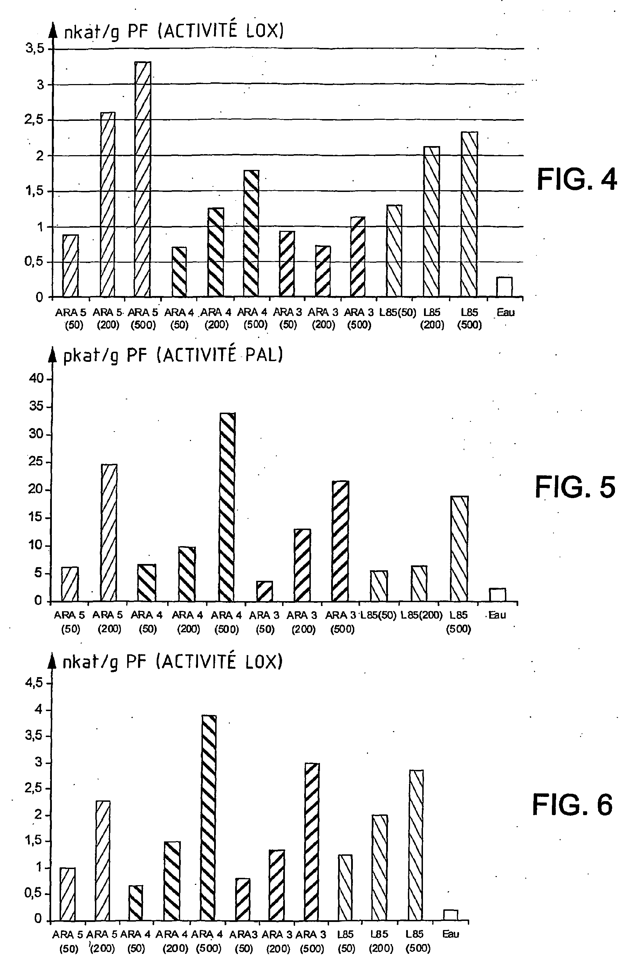

Les résultats ainsi obtenus sont réunis sur les diagrammes
- de la figure 3 pour autant qu'il s'agit du dosage de l'activité PAL dans le cas du tabac,
- de la figure 4 pour autant qu'il s'agit du dosage de l'activité LOX dans le cas du tabac,
- de la figure 5 pour autant qu'il s'agit du dosage de l'activité PAL dans le cas de la tomate,
- de la figure 6 pour autant qu'il s'agit du dosage de l'activité LOX dans le cas de la tomate,

L'examen des diagrammes des figures 3 à 6 montre
- que dans le cas du tabac, la stimulation de l'activité PAL en fonction de la dose est globalement similaire pour les fractions ARA5 et la laminarine, ARA4 et 3 étant moins efficaces et que pour la stimulation de l'activité LOX, les produits ARA4 et ARA3 ont une activité inférieure à la laminarine, alors que le produit ARA5 induit un effet beaucoup plus fort que la laminarine,
- que dans le cas de la tomate, les produits ARA3, ARA4. et ARA5 stimulent les activités PAL et LOX avec un niveau au moins aussi élevé que la laminarine, le produit ARA5 étant le plus efficace.

Il est donc possible de conclure que les arabinoxylanes éventuellement hydrolysés et les oligomères de xylane, notamment de xylane de hêtre utilisés conformément à l'invention sont des éliciteurs efficaces des activités PAL et LOX chez les plantes notamment des monocotylédones et en particulier des céréales et plus particulièrement du blé, net des dicotylédones, notamment de la vigne, du tabac, de la pomme de terre et de la tomate.

Dans la pratique, on traite les plantes dont il s'agit de stimuler les défenses naturelles soit lors d'une attaque par un agent pathogène soit en vue d'une attaque future, à l'aide d'une composition, notamment d'une solution aqueuse qui doit être appliquée sur les feuilles ou sur les semences et qui comprend, outre les véhicules et constituants classiques de ce genre de composition, au moins un des produits du groupe comprenant les arabinoxylanes et les xylanes éventuellement hydrolysés tels que définis plus haut, présents aux concentrations également indiquées plus haut et qui dépendent du résultat recherché, c'est à dire une stimulation immédiate ou une potentialisation des défenses.

Le traitement est généralement réalisé à partir des premiers stades végétatifs de la plante éventuellement en plusieurs applications successives avantageusement par pulvérisation.

Le moment précis de la ou des applications sera choisi notamment en fonction de la plante traitée.

Le véhicule ou vecteur est généralement l'eau.

Il est toutefois possible d'avoir recours, en lieu et place de l'eau, à un vecteur choisi dans le groupe comprenant les huiles minérales, les huiles végétales, tous corps gras liquides et les alcools dont notamment le propylèneglycol ou le glycérol.

Les constituants classiques essentiels des susdites compositions peuvent varier selon la nature de la plante traitée ; ils sont généralement choisis dans le groupe comprenant des solvants, des agents tensio-actifs, des agents dispersants et/ou des charges solides.

A titre d'exemples non limitatifs, on donne ci-après les constituants d'un concentré liquide et d'une poudre concentrée soluble à base des produits utilisés conformément à l'invention.

### 1. Concentré liquide pour l'agriculture à base d'arabinoxylane du type ARA5:

| | |
|---|---|
| Arabinoxylane ARA5 | 0.1 kg |
| Tween 80 | 0.2 kg |
| Méthylparaben sodé | 0.001 kg |
| Eau | qsp 1 kg |
| Total | 1 kg |

Ce concentré liquide est utilisé après dilution d'une quantité comprise de préférence entre 500 et 50000 g, de préférence entre 500 à 1000 g, dans 1000 litres d'eau.

Cette dilution fournit une composition présentant une teneur arabinoxylanes, comprise entre 50 et 5000 g de préférence entre 50 et 1000 g, pour 1000 litres d'eau.

### 2. Poudre concentrée soluble contenant l'arabinoxylane ARA5, en tant que matière active

Pour 1 kg en poids/poids, la constitution de cette poudre est comme suit:

| | |
|---|---|
| Arabinoxylane ARA5 | 0.15 kg |
| Kaolin | 0.5 kg |
| Mannose | 0.05 kg |
| Méthylparaben sodé | 0.005 kg |
| Amidon purifié | 0.295 kg |
| Total | 1 kg |

Cette poudre concentrée est utilisée après dilutions dans une quantité suffisante d'eau pour obtenir une composition dont la teneur en arabinoxylane ARA 5 est comprise entre 50 et 5000 g pour 1000 litres d'eau, de préférence entre 50 et 1000 g.

## Revendications

1. Procédé pour la stimulation des défenses naturelles des monocotylédones et des dicotylédones, **caractérisé par le fait que** l'on applique aux feuilles ou aux semences ou graines, une quantité efficace d'au moins un des produits du groupe comprenant les pentosans sous la forme d'une composition dont la concentration en au moins un des produits du dit groupe est de 50 mg/L à 5000 mg/L, la quantité efficace correspondant à la quantité en au moins l'un des dits produits qui est apportée aux monocotylédones et aux dicotylédones à traiter en appliquant la susdite composition à raison de 10 g à 1000 g, par hectare de culture.

2. Procédé de stimulation et de potentialisation des défenses naturelles des monocotylédones et des dicotylédones, **caractérisé par le fait qu'**on applique aux feuilles ou aux semences ou graines et avant toute agression par un agent pathogène, une quantité efficace d'au moins un des produits du groupe comprenant les pentosans sous la forme d'une composition contenant le ou les produits en question à une concentration de 0.1 mg/L à 50 mg/L, la quantité efficace correspondant à celle qui est apportée aux monocotylédones et aux dicotylédones à traiter en appliquant la susdite composition à raison de 50L à 1000L par hectare de culture.

3. Procédé selon la revendication **1 ou 2, caractérisé en ce que** la composition est une solution aqueuse.

4. Procédé selon l'une quelconque des revendications **1 à 3, caractérisé en ce que** le produit du groupe des pentosans est choisi parmi les arabinoxylanes et les xylanes éventuellement hydrolysés.

5. Procédé selon l'une quelconque des revendications **1 à 4, caractérisé en ce que** les monocotylédones sont des céréales et les dicotylédones sont choisies parmi la vigne, le tabac, la pomme de terre et la tomate.

6. Procédé selon l'une quelconque des revendications **1 à 5, caractérisé en ce que** la céréale est le blé.

7. Procédé selon la revendication **4, caractérisé en ce que** les arabinoxylanes et les xylanes sont des arabinoxylanes et des xylanes de hêtre ainsi que leurs produits de dégradation.

## Patentansprüche

1. Verfahren zur Stimulation natürlicher Abwehrmechanismen bei einkeimblättrigen und zweikeimblättrigen Pflanzen, **dadurch gekennzeichnet, dass** auf die Blätter oder das Saatgut oder die Samen eine wirksame Menge mindestens eines Produkts der Pentosane umfassenden Gruppe in Form einer Zusammensetzung angewendet wird, deren Konzentration an mindestens einem Produkt der Gruppe 50 mg/l bis 5.000 mg/l ist, wobei die wirksame Menge der Menge mindestens eines der Produkte entspricht, die den zu behandelnden einkeimblättrigen und zweikeimblättrigen Pflanzen gegeben wird, indem die Zusammensetzung im Verhältnis von 10 g bis 1.000 g pro Hektar Anbaufläche angewendet wird.

2. Verfahren zur Stimulation und Potenzierung natürlicher Abwehrmechanismen bei einkeimblättrigen und zweikeimblättrigen Pflanzen, **dadurch gekennzeichnet, dass** auf die Blätter oder das Saatgut oder die Samen und zwar vor jeglichem Angriff durch ein Pathogen eine wirksame Menge mindestens eines Produkts der Pentosane umfassenden Gruppe, in Form einer Zusammensetzung angewendet wird, die das oder die betreffenden Produkte in einer Konzentration von 0.1 mg/l bis 50 mg/l enthält, wobei die wirksame Menge der Menge entspricht, die den zu behandelnden einkeimblättrigen und zweikeimblättrigen Pflanzen gegeben wird, indem die Zusammensetzung im Verhältnis von 50 l bis 1.000 l pro Hektar Anbaufläche angewendet wird.

3. Verfahren nach Anspruch **1 oder 2, dadurch gekennzeichnet, dass** die Zusammensetzung eine wässrige Lösung ist.

4. Verfahren nach einem der Ansprüche **1 bis 3, dadurch gekennzeichnet, dass** das Produkt der Pentosan-Gruppe ausgewählt ist aus gegebenenfalls hydrolysierten Arabinoxylanen und Xylanen.

5. Verfahren nach einem der Ansprüche **1 bis 4, dadurch gekennzeichnet, dass** die einkeimblättrigen Pflanzen Getreidepflanzen sind und die zweikeimblättrigen Pflanzen ausgewählt sind aus Weinrebe, Tabak, Kartoffel und Tomate.

6. Verfahren nach einem der Ansprüche **1 bis 5, dadurch gekennzeichnet, dass** die Getreidepflanze Weizen ist.

7. Verfahren nach Anspruch **4, dadurch gekennzeichnet, dass** die Arabinoxylane und die Xylane Arabinoxylane und Xylane ebenso wie ihre Abbauprodukte von der Buche sind.

## Claims

1. Method for the stimulation of the natural defenses of monocotyledons and of dicotyledons, **characterized in that** an effective amount of at least one of the products of the group comprising pentosans, in the form of a composition whose concentration of at least one of the products of said group is from 50 mg/l to 5000 mg/l, is applied to the leaves or to the seeds or grains, the effective amount corresponding to the amount of at least one of said products that is provided to the monocotyledons and dicotyledons to be treated by applying the above mentioned composition in a proportion of 10 g to 1000 g per hectare of crop.

2. Method for the stimulation and potentiation of the natural defenses of monocotyledons and of dicotyledons, **characterized in that** an effective amount of at least one of the products of the group comprising pentosans, in the form of a composition containing the product(s) in question at a concentration of 0.1 mg/l to 50 mg/l, is applied to the leaves or to the seeds or grains and before any attack by a pathogenic agent, the effective amount corresponding to that which is provided to the monocotyledons and dicotyledons to be treated by applying the above mentioned composition in a proportion of 50 1 to 1000 1 per hectare of crop.

3. Method according to Claim **1 or 2, characterized in that** the composition is an aqueous solution.

4. Method according to any one of Claims **1 to 3, characterized in that** the product of the group of pentosans is chosen from optionally hydrolysed arabinoxylans and xylans.

5. Method according to any one of Claims **1 to 4, characterized in that** the monocotyledons are cereals and the dicotyledons are chosen from vine, tobacco, potato and tomato.

6. Method according to any one of Claims **1 to 5, characterized in that** the cereal is wheat.

7. Method according to Claim 4, **characterized in that** the arabinoxylans and the xylans are beech arabinoxylans and xylans and also degradation products thereof.
